# EUROPEAN PATENT APPLICATION

(11) **EP 1 298 101 A1**
(43) Date of publication of application: **02.04.2003**
(21) Application number: 01998512.6
(22) Date of filing: 27.11.2001
(51) Int. Cl.: C03C 27/06, E06B 3/66

(54) **GLASS PANEL AND METHOD OF MANUFACTURING THE GLASS PANEL**

(30) Priority: 30.11.2000 JP 2000365408
(71) Applicant: Nippon Sheet Glass Co., Ltd., Osaka-shi, Osaka 541-8559 (JP)
(72) Inventor: DOMI, Shinjiro, c/o NIPPON SHEET GLASS CO., LTD., Osaka-shi, Osaka 541-8559 (JP); SAKAGUCHI, Koichi, c/o NIPPON SHEET GLASS CO., LTD, Osaka-shi, Osaka 541-8559 (JP); NAKAGAKI, Shigeki, c/o NIPPON SHEET GLASS CO., LTD, Osaka-shi, Osaka 541-8559 (JP)
(74) Representative: Kaiser, Magnus, Dipl.-Phys.
(86) International application number: JP0110342
(87) International publication number: WO02044097

(57) **Abstract**

To improve the inserting step of inserting a guide member into a gap between glass sheets so that the step may proceed smoothly without collision between the guide member and the glass sheets.

In a method of manufacturing a glass panel (G) comprising the step of bonding together gastight a pair of glass sheets (1, 2) arranged in opposition to each other via a gap (V) therebetween, an inserting step is effected for inserting a leading end of a guide member (8) for guiding molten solder (a) into the gap (V) from an open end portion (k) of the peripheral edges, the open end portion having a progressively increasing opening width toward the outer side; and a charging step is effected of moving the guide member (8) along the peripheral edges of the glass sheets (1, 2) with the leading end of the guide member (8) being inserted into the gap V.

## Description

### TECHNICAL FIELD

The present invention relates to a glass panel including a pair of glass sheets forming a gap between opposing faces thereof, with the gap being sealed gastight at peripheries of the glass sheets. Incidentally, such pairs of glass sheets having a gap therebetween are all categorized herein as "a multilayered glass panel".

### BACKGROUND ART

Conventionally, in a multilayered glazing or a glass panel having its peripheral edge sealed, in order to obtain gastightness at the gap between its glass sheets, there is known the technique of charging a metal material such as solder along the entire peripheral edges of the opposing faces of the glass sheets for bonding them together. In general, surface of a glass sheet has poor wettability relative to molten metal, so that the surface cannot be bonded well to the molten metal directly. For this reason, according to the international publication: WO00/58234, there is disclosed a manufacturing method in which a guide member is inserted into the gap between the pair of glass sheets and then moved to introduce the metal material therein, so as to provide satisfactory bonding of the metal material to the hardly wettable glass sheets for improving the gastightness.

However, the above-discussed publication does not refer at all to the problem encountered in the course of the insertion of the guide member between the pair of glass sheets. Namely, the gap of a multilayered glass panel is generally extremely small (about 0.2 mm), whereas the guide member is a thin-film like plate member having thickness of about 0.1 mm. Then, it is difficult to smoothly insert the guide member into the gap, so that several attempts are often made to insert the member or the guide member is often damaged during the insertion by colliding against the end face of either glass sheet. In this regard, there remains room for improvement.

In the method of charging the metal material while moving the guide member in the gap between the glass sheets, an object of the present invention is to make it possible for the inserting step of the guide member into the gap prior to the charging step to be effected smoothly without collision between the guide member and the glass sheets.

### DISCLOSURE OF THE INVENTION

### [CONSTRUCTION AND ITS FUNCTION]

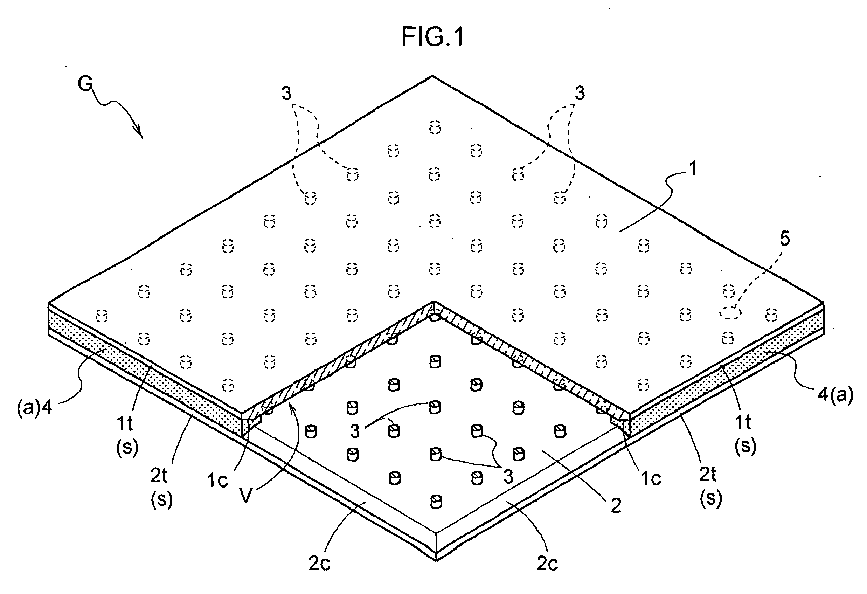

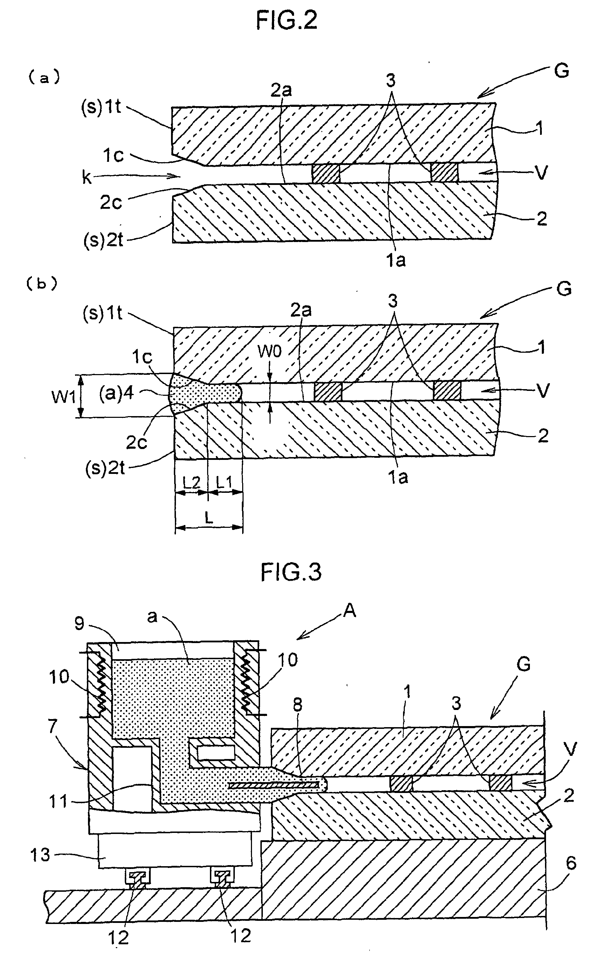

According to a construction defined in claim 1, as illustrated in Figs. 1 and 2 for example, a glass panel including a pair of glass sheets 1, 2 disposed in opposition to each other via a gap (V) therebetween, peripheral edges (s) of the glass sheets 1, 2 being bonded together via a metal material (a) charged into the gap (V) for sealing the gap (V) gastight;
characterized in that
at least a portion of the peripheral edges (s) forms an open end portion (k) which has a progressively increasing opening width toward the outer side.

With the above construction defined in claim 1, the open end portion having a progressively increasing opening width toward the outer side is formed in at least a portion of the peripheral edges. Then, if the guide member is inserted from this open end portion, the open end portion functions to guide the guiding member into the narrow gap. Therefore, it becomes possible to insert the guide member into the gap smoothly and speedily without collision against the end face of the glass sheets or without repeated attempts of insertion.

Consequently, by forming, in at least a portion of the peripheral edges of the pair of glass sheets, an open end portion having a progressively increasing opening width toward the outer side and having the function of guiding to the gap, it is possible to smoothly insert the guide member for charging the metal material into the gap between the pair of glass sheets for improvement of the gastightness, into the narrow gas between the glass sheets, without the risk of collision against the end face of the glass sheets. As a result, it has become possible to make the bonding operation of the two glass sheets easier and more speedily.

According to a construction defined in claim 2, as illustrated in Fig. 2 for example, said open end portion (k) is formed by chamfering the entire peripheral edges of the two glass sheets 1, 2. Incidentally, in the context of the present invention, the term: "chamfering" refers not only to the standard chamfering operation generally effected by means of grinding or polishing, but also to an operation for blunting the end face of the glass sheet by means of chemical etching or local heat-fusing operation using laser.

With the construction defined in claim 2, since the open end portion is formed along the entire peripheries of the glass sheets, it becomes possible to smoothly insert the guide member from anywhere without being limited in position. This will increase the degree of freedom in the inserting operation of the guide member and allow the inserting position to be changed freely.

As a result, because the open end portion is formed along the entire peripheries of the glass sheets, the effect of the construction defined in claim 1 can be achieved, with the additional advantage of the greater convenience of the possibility of inserting the guide member from anywhere into the gap between the glass sheets.

According to a construction defined in claim 3, as illustrated in Fig. 2 for example, in the construction defined in claim 1 or claim 2, a gap dimension (W1) of the gap (V) measured at the leading end of the open end portion (k) is set to be greater than two times of a gap dimension (W0) of the gap (V) measured at a base end of the open end portion (k).

With the construction defined in claim 3, in inserting the guide member from the open end portion, if the thickness of the guide member is substantially equal to the gap dimension measured at the base end of the open end portion (k), for the opening width of the open end portion (k) there is assured an extra margin greater than two times of this thickness of the guide member. So that, it becomes possible to insert the guide member smoothly and speedily, without collision of the guide member against the end face of the glass sheets or without repeated attempts of insertion.

Consequently, in addition to achievement of the effect of the construction defined in claim 1 or claim 2, it has become possible to effect the insertion operation of the guide member into the gap even more smoothly, so that the manufacturing efficiency of the glass panel may be improved.

According to a construction defined in claim 4, as illustrated in Fig. 2 for example, in the construction defined in any one of claims 1 through 3, of a seal width dimension (L) of an outer periphery sealed portion 4 of the peripheral edges (s) of the pair of glass sheets 1, 2 charged and sealed with the metal material (a), a dimension (L2) corresponding to the open end portion (k) is set to be less than 0.5 time of the seal width dimension (L).

With this construction defined in claim 4, while effectively maintaining the sealing effect at the outer periphery sealed portion, it is possible to reduce the amount of the metal material charged to the open end portion where it is difficult for the metal material to provide its sealing effect, thereby to cut down the amount of the metal material to be charged to the outer peripheral portion, so that cost reduction of the glass panel is made possible for economic advantage.

Consequently, in addition to achievement of the effect of the construction defined in any one of claims 1 through 3, it has become possible to reduce the amount of the metal material charged to the outer peripheral sealed portion, and eventually to achieve cost reduction of the glass panel.

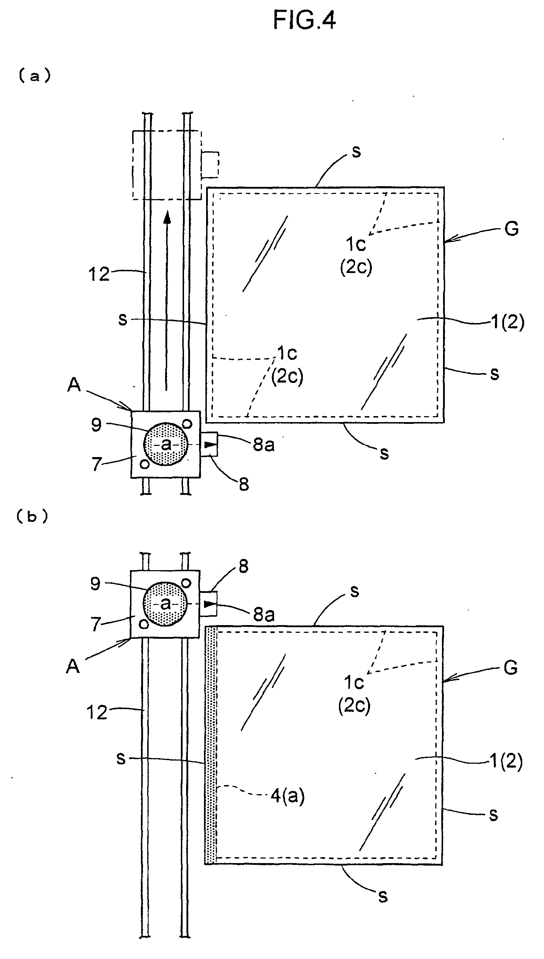

According to a method defined in claim 5, as illustrated in Figs.3 and 4 for example, there is provided a method of manufacturing a glass panel comprising the step of bonding together gastight a pair of glass sheets 1, 2 arranged in opposition to each other via a gap (V) therebetween, by charging molten metal material (a) to the gap (V) at peripheral edges (s) of the pair of glass sheets,
characterized in that
the method comprises the steps of: inserting a leading end 8a of a guide member 8 for guiding the molten metal material (a) into the gap (V) from an open end portion (k) of the peripheral edges (s), the open end portion (k) having a progressively increasing opening width toward the outer side; and a charging step of moving the guide member 8 along the peripheral edges (s) with the leading end 8a of the guide member 8 being inserted into the gap (V).

With the method defined in claim 5, in the inserting step effected prior to the charging step of charging the metal material while moving the guide member in the gap, the leading end of the guide member is inserted into the gap from the open end portion of the peripheral edges, having a progressively increasing opening width toward the outer side. With this, as the open end portion functions to guide the guide member into the narrow gap, it becomes possible to insert the guide member into the gap smoothly and speedily, without collision of the guide member against the end face of the glass sheets or without repeated attempts of insertion.

As a result, since the inserting step of inserting the guide member from the open end portion having a progressively increasing open width toward the outer side formed at the peripheral edges of the pair of glass sheets is effected prior to the charging step of charging the metal material into the gap between the glass sheets, it has become possible to smoothly insert the guide member, which is adapted for improving the adherence of the metal material charged into the gap between the pair of glass sheets, into the narrow gap between the glass sheets without the risk of collision against the end faces of the glass sheets, whereby the bonding operation of the two glass sheets has been made easier and speedier.

Incidentally, although reference marks are provided in the above in order to facilitate reference to the drawings, it is understood that this provision of reference marks is not to limit the scope of the invention to the constructions and method illustrated in the drawings.

### BRIEF DESCRIPTION OF THE DRAWINGS

Fig. 1 is a perspective view showing a construction of a glass panel,
Fig. 2 shows a construction of an end portion of the glass panel, (a) being a section view showing the construction before charging of solder therein, (b) being a section showing the construction after charging of solder therein, respectively,
Fig. 3 is a partially cutaway side view showing a schematic construction of a bonding apparatus,
In Fig. 4, (a) is a plan view showing a condition when an inserting step for inserting a guide plate into a gap is about to begin, and (b) is a plan view showing a condition when the solder inserting step for a first side is completed,
In Fig. 5, (a) is a plan view showing a condition when an inserting step for a second side is about to begin, and (b) is a plan view showing the solder inserting step for the last side,
Fig. 6 is a perspective view showing another construction of an open end portion,
Fig. 7 is a section view showing still another construction of an open end portion, and
Fig. 8 is an enlarged perspective view showing another shape of an introducing plate.

### BEST MODE OF EMBODYING THE INVENTION

Next, embodiments of the invention will be described with reference to the drawings.

Fig. 1 shows a glass panel G. This glass panel G comprises the so-called "evacuated multilayered glazing" including a pair or glass sheets 1, 2 forming a nearly evacuated gap therebetween. Referring to its construction in details, a number of spacers 3 are interposed between the pair of glass sheets 1, 2 having their faces opposed to each other, and along and between outer peripheries of these glass sheets 1,2, there is provided an outer periphery sealed portion 4 for forming the nearly evacuated gap V between the pair of glass sheets 1, 2. Each glass sheet 1, 2 has a thickness of 2.6 mm to 3.2 mm.

The outer periphery sealed portion 4 is formed of solder (a) as an example of metal material. The sealed portion 4 is adapted for providing sealing between the outer peripheral edges of the two glass sheets 1, 2 for maintaining the inner gap V gastight. The gap V is maintained under a depressurized condition of e.g. 1.33 Pa (corresponding to 0.01 Torr) or lower. For this reason, the one glass sheet 2 includes an evacuating hole 5 for evacuating/depressurizing operation, and this evacuating hole 5 is sealed after the evacuating operation. The solder (a) employed comprises Sn-Zn-Ti type molten solder.

The spacer 3 is formed of a material having a compression strength of 4.9 x 10⁸ Pa or more, e.g. stainless steel (SUS304). Preferably, the spacer comprises a cylindrical member having a diameter of 0.3 mm to 1.0 mm and a height of 0.15 mm to 1.0 mm. Preferably, the distance between adjacent spacers 3 is about 20 mm. The material forming the spacer 3 is not particularly limited to the stainless steel, but this spacer 3 may be formed alternatively of Inconel 718 alloy or other metal material, or of other various materials such as quartz glass, ceramics. Further, its shape is not limited to the cylindrical shape, but may be prismatic shape or the like instead. Also, the distance between adjacent spacers 3 may vary as needed.

As shown in Fig. 2, in the glass sheets 1, 2, inclined faces 1c,2c obtained by chamfering edges of their opposing sheet faces 1a, 2a are formed along the entire periphery of each of the sheet faces 1a, 2a. That is to say, the inclined faces 1c, 2c together form an open end portion (k) of the gap V having a progressively increasing opening width toward the outer side, and this open end portion (k) is formed along the entire peripheral edges (s) of the glass sheets 1, 2. These inclined faces 1c, 2c have a same angle and same dimensions. Therefore, the glass sheets 1, 2 are provided as identical components. Incidentally, Fig. 2 (a) shows a condition before the solder (a) is charged and Fig. 2 (b) shows a condition after the solder (a) is charged, respectively.

Next, a manufacturing method of the glass panel G will be described.

Fig. 3 shows a bonding apparatus A for introducing the solder (a) along the peripheries (s) of the gap V formed between the glass sheets 1,2. This bonding apparatus A includes a board 6, a supply tower 7 linearly movable along the longitudinal direction of the board 6, a flat introducing plate 8 (an example of "guide member") which projects sideway from the lower end of the supply tower 7 and which is very thin vertically and elongate in the horizontal direction, and so on.

The supply tower 7 includes a melting pot 9 for storing the molten solder (including non-molten solder as well) (a), an electric heater 10 capable of heating the melting pot 9 and keeping it hot, an introducing passage 11 connecting between the bottom of the melting pot 9 and a support portion of the introducing plate 8, and a moving mechanism 13 for allowing traveling of the apparatus using rail members 12 disposed adjacent the board 6. That is to say, the apparatus can move on the rail members 12 at a constant speed and with maintaining a constant vertical height relative to the board 6 while supplying the molten solder (a) stored in the melting pot 9 to the introducing plate 8 portion via the introducing passage 11.

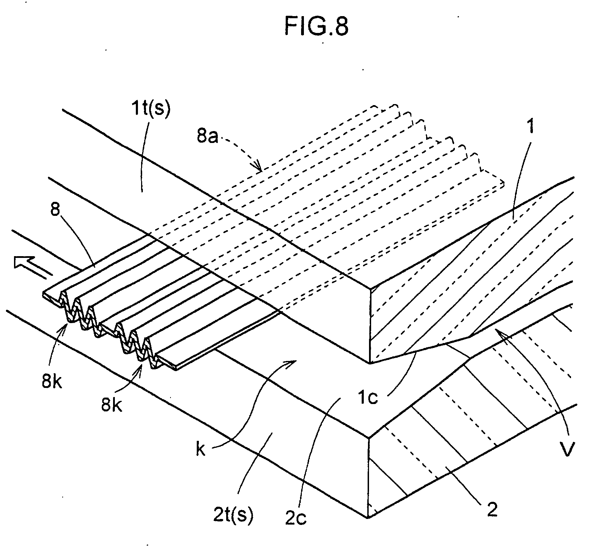

Incidentally, as shown in Fig. 8, the introducing plate 8 may alternatively be of a shape in which a plurality of vertical cycles of flexions 8k are formed at two areas thereon along the moving direction. That is, in association with the movement of the introducing plate 8, the flexions 8k having a spring-like effect will lightly rub on the surfaces of the glass sheets 1, 2, thereby to improve the adherence of the solder (a) to the glass faces, thus eventually assuring the gastightness of the gap V.

First, the rectangular glass sheets 1, 2 set in opposition to each other via the number of spacers 3 therebetween are placed horizontally on the board 6. In this, the glass sheets 1,2 are to be set so that one side of each glass sheet 1, 2 will be disposed parallel with the rail members 12 in a plan view. Next, the height position of the introducing plate 8 is set so as to be located at the thickness-wise center of the gap V between the glass sheets 1, 2. This setting may be automatically determined based on the relative positional relationship between the board 6 and the supply tower 7 and the widths of the glass sheets 1,2 and the gap V [see Fig. 4 (a)].

Once the height of the introducing plate 8 is decided, then, the moving mechanism 13 is activated to move the supply tower 7,thereby to effect the inserting step of inserting a leading end 8a of the introducing plate 8 into the gap V. In the course of this, the molten solder (a) is introduced through the introducing passage 11 to the introducing plate 8, so that the solder will be charged along this introducing plate 8 into the gap V. In this inserting step, the introducing plate 8 will always be inserted from the open end portion (k) into the narrow gap V. Therefore, even when some inconvenience has occurred such as poor precision in the relative height between the supply tower 7 and the board 6 or some amount of vertical warping of the introducing plate 8, the introducing plate 8 can be smoothly inserted into the gap V without colliding against end faces 1t, 2t of the respective glass sheets 1, 2.

Once the leading end 8a of the introducing plate 8 has been inserted into the gap V, in succession thereto, the charging step for supplying the solder (a) while moving the supply tower 7 at a constant speed will be effected until the introducing plate 8 has completely exited the gap V from the opposite end to the end where the plate 8 was first inserted. With this, the solder charging operation for one of the four sides of the rectangular glass panel is completed [see Fig. 4 (b)].

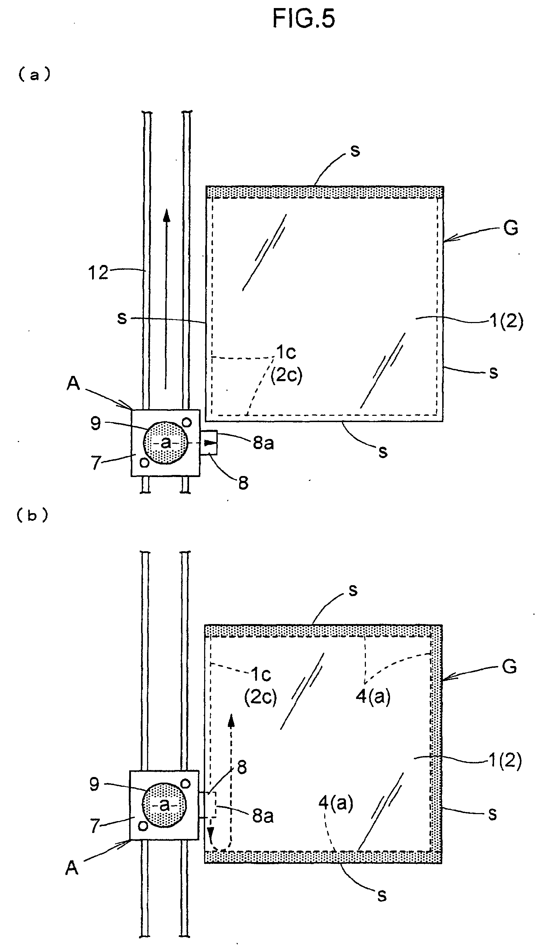

The solder charging operations for two of the remaining three sides will proceed by inserting the introducing plate 8 from the end where the solder (a) was not charged in the previous operation [see Fig. 5 (a)]. And, for the solder charging operation for the last one side, the introducing plate 8 maybe inserted from either end. Or, as illustrated in Fig. 5 (b), the plate may be inserted from an intermediate portion of the side and then moved to one end and thereafter moved from the intermediate portion to the other end.

Next, referring to the fitting dimension of the peripheral edges (s) of the glass sheets 1, 2, a gap dimension W1 of the gap V measured at the leading end of the open end portion (k) is set to be greater than two times of a gap dimension W0 of the gap V measured at a base end of the open end portion (k). And, referring to the fitting dimension of the peripheral sealed portion 4 including the solder (a), as shown in Fig. 2, the solder (a) forming the peripheral sealed portion 4 is charged on the inclined faces 1c, 2c and portions of the sheet faces 1a, 2a of the two glass sheets 1, 2. And, mark: L1 in the figure denote a width of a portion of the seal width L sealed with the solder (a) which portion is bonded to the sheet faces 1a, 2a, A mark: L2 in the figure denotes the remaining width (i.e. the dimension of the open end portion (k) along the longitudinal direction of the glass sheets 1, 2). Preferably, the dimension corresponding to L1 is 2.5 mm or greater in order to assure good bonding performance and sealing performance. Further, when even better bonding performance and sealing performance are desired, it is preferred that L1 be set to be 5 mm or greater. On the other hand, L2 in the figure is set to be less than substantially 1/2 of the seal width L.

Also, the above-described relationship between W1 and W0 was discovered as a condition which allows smooth insertion of the introducing plate 8 into the gap V.

Namely, as the introducing plate 8 is adapted for guiding and charging the solder (a) to the gap V while the plate is rubbing on the sheet faces 1a, 2a, the thickness of the plate is set to be substantially equal to W0. In this sense, the setting of W1 greater than 2 times of W0 means that the dimension W1 at the entrance to the gap V has an extra margin of greater than 2 times of the introducing plate 8. This relationship of being greater than 2 times has been confirmed by the present inventors as a value suitable for the insertion of the introducing plate 8 into the gap V.

Incidentally, in this particular embodiment, W0 = 0.2 mm, W1 = 5.2 mm, L = 5..0 mm, L1 = 2.5 mm, L2 = 2.5 mm and the chamfering angle of the inclined faces 1c, 2c of the glass sheets 1, 2 is set at the angle of 45 degrees relative to the glass face.

### [other embodiments]

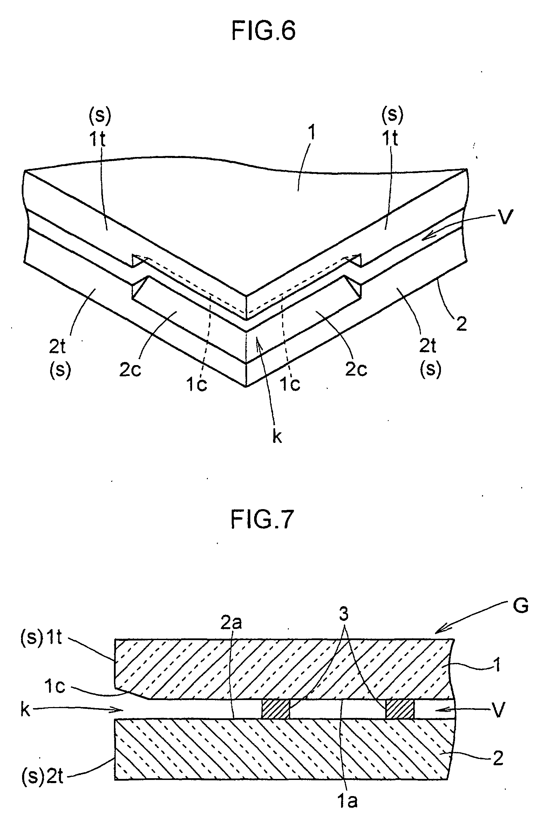

As shown in Fig. 6, the open end portion (k) formed by the inclined faces 1c, 2c formed by chamfering the two glass sheets 1, 2 may be provided limitedly only at a corner portion of the entire peripheral edges (s) which portion is required for the insertion of the introducing plate 8. Further alternatively, as shown in Fig. 7, the open end portion (k) may be constituted from the inclined face 1c (or 2c) of one glass sheet 1 (or 2) alone.

Next, other embodiments will be described.
<1> The glass panel relating to the present invention may be used for various applications, such as for a building, vehicle (windowpane of an automobile, a windowpane of a railway car, a windowpane of a ship), for various instruments (surface glass of a plasma display apparatus, a opening/closing door or a wall of a refrigerator, an opening/closing door or wall of a heat reserving device).
   Further, the evacuated depressurized condition in the gap between the two glass sheets of the glass panel is not limited to the condition described in the foregoing embodiment, i.e. 1.13 Pa (0.01 Torr) or lower. The evacuation/depressurization degree per se may be freely set. Or, it may even be a pressure condition equal to the atmospheric pressure.
<2> The glass sheet is not limited to the sheet glass described in the foregoing embodiment which has the thickness from 2.65 mm to 3.2 mm. The glass sheet may have other values of thickness. Further, the glass panel may be formed by using in combination one glass sheet and the other glass sheet which sheets are different in thickness from each other.
   Also, the type of glass sheet may be freely selected. For instance, it may be a figured glass, frosted glass (glass provided with the function of diffusing light through a surface treatment), mesh glass, or a reinforced glass or other glass sheets provided with a function of heat absorption, heat reflection, UV absorption, etc. or these kinds of glass may be used in combination.
   Further, the composition of the glass may be soda silica glass (soda lime silica glass), borosilicate glass, aluminosilicate glass, various kinds of crystallized glass.
<3> The spacer is not limited to the spacer described in the forgoing embodiment made of the Inconel 718. Instead, it may be formed of e.g. stainless steel, other kind of metal, quartz glass, ceramic glass, glass, low-melting glass, etc. In short, the spacer may be formed of any material as long as it can effectively resist deformation so as to prevent the two glass sheets from coming into contact with each other when exposed to an external force.
<4> The metal material is not limited to that described in the foregoing embodiment which is formed by using the solder or low melting glass. Instead, it may contain, as a main component(s) thereof, one or more than two kinds of components selected from e.g. tin, bismuth, lead, zinc, indium, antimony, etc. Further, it may additionally contain one or more than two kinds selected from silver, aluminum, copper, etc.

### Industrial Applicability

In the method of charging the metal material while moving the guide member in the gap between the glass sheets, the method of the present invention makes it possible for the inserting step of the guide member into the gap prior to the charging step to be effected smoothly without collision between the guide member and the glass sheets.

## Claims

1. A glass panel including a pair of glass sheets (1, 2) disposed in opposition to each other via a gap (V) therebetween, peripheral edges (s) of the glass sheets (1, 2) being bonded together via a metal material (a) charged into the gap (V) for sealing the gap (V) gastight;
**characterized in that**
at least a portion of the peripheral edges (V) forms an open end portion (k) which has a progressively increasing opening width toward the outer side.

2. A glass panel according to claim 1, **characterized in that** said open end portion (k) is formed by chamfering the entire peripheral edges of the two glass sheets (1, 2).

3. A glass panel according to claim 1 or 2, **characterized in that** a gap dimension of the gap (V) measured at the leading end of the open end portion (k) is set to be greater than two times of a gap dimension of the gap (V) measured at a base end of the open end portion (k).

4. A glass panel according to claim 1 or 2, **characterized in that** of a seal width dimension of an outer periphery sealed portion (4) of the peripheral edges (s) of the pair of glass sheets (1, 2) charged and sealed with the metal material (a), a dimension corresponding to the open end portion (k) is set to be less than 0.5 time of the seal width dimension.

5. A method of manufacturing a glass panel comprising the step of bonding together gastight a pair of glass sheets (1, 2) arranged in opposition to each other via a gap (V) therebetween, by charging molten metal material (a) to the gap (V) at peripheral edges (s) of the pair of glass sheets,
**characterized in that**
the method comprises the steps of: inserting a leading end of a guide member (8) for guiding the molten metal material (a) into the gap (V) from an open end portion (k) of the peripheral edges, the open end portion having a progressively increasing opening width toward the outer side; and a charging step of moving the guide member (8) along the peripheral edges with the leading end of the guide member (8) being inserted into the gap (V).
